Europäisches Patentamt

**European Patent Office**

**Office européen des brevets**

(11) Publication number: **0 180 291**
**A1**

(12) **EUROPEAN PATENT APPLICATION**

(21) Application number: **85304727.2**

(22) Date of filing: **02.07.85**

(51) Int. Cl.⁴: **C 10 G 11/18, B 01 J 8/18**

(30) Priority: **26.10.84 US 665333**
**08.02.85 US 699536**

(43) Date of publication of application: **07.05.86**
**Bulletin 86/19**

(84) Designated Contracting States: **BE DE FR GB IT NL**

(71) Applicant: **MOBIL OIL CORPORATION, 150 East 42nd Street, New York New York 10017 (US)**

(72) Inventor: **Penick, Joe Edward, 181 Library Place, Princeton New Jersey 08540 (US)**

(74) Representative: **West, Alan Harry, Mobil Court 3 Clements Inn, London WC2A 2EB (GB)**

(54) **Feed mixing technique for fluidized catalytic cracking of hydrocarbon oil.**

(57) A fluidized catalytic cracking technique utilizes an increment of catalyst to vaporize oil feedstock substantially below cracking temperature. A hot active second catalyst increment then cracks the vaporized oil to prevent overcracking. A continuous feed unit including a regeneration loop catalyst mixing means and temperature control is provided.

EP 0 180 291 A1

## FEED MIXING TECHNIQUE FOR FLUIDIZED CATALYTIC

## CRACKING OF HYDROCARBON OIL

This invention relates to fluidized catalytic cracking (FCC) units for converting heavy petroleum fractions to produce lighter fuel products. In particular, it relates to a mixing device for combining a continuous liquid feed stream with hot fluidizable solid catalyst particles in a fast riser type FCC vessel.

Conversion of various petroleum fractions to more valuable products in catalytic reactors is well known in the refining industry where the use of FCC units is particularly advantageous for that purpose. The FCC unit typically comprises a reactor vessel containing a mixture of regenerated catalyst and the feed and a regenerator vessel wherein spent catalyst is regenerated. The feed is converted in the reactor vessel over the catalyst, and carbonaceous deposits simultaneously form on the catalyst, thereby deactivating it. The deactivated (spent) catalyst is removed from the reactor and conducted to the regenerator, wherein coke is burned off the catalyst with air, thereby regenerating the catalyst. The regenerated catalyst is then recycled to the reactor. The reactor-regenerator assembly must be maintained in steady state heat balance, so that the heat generated by burning the coke provides sufficient thermal energy for catalytic cracking in the reactor vessel. The steady state heat balance is usually achieved and maintained in FCC reactors by controlling the rate of flow of the regenerated catalyst from the regenerator to the reactor by means of an adjustable slide valve in the regenerator-to-reactor conduit.

Typically, the product stream of the catalytic cracker is fractionated into a series of products, including gas, gasoline, light gas oil, and heavy cycle gas oil. A portion of the heavy cycle gas oil is usually recycled into the reactor vessel and mixed with fresh feed. The bottom effluent of the fractionator is conventionally subjected to settling and the solid-rich portion of the settled product may be recycled to the reactor vessel in admixture with the heavy cycle gas oil and feed.

In a modern FCC reactor, the regenerated catalyst is introduced into the base of a riser reactor column in the reactor vessel. A primary purpose of the riser reactor is to crack the petroleum feed. The regenerated hot catalyst is admixed in the bottom of the riser reactor with a stream of fresh feed and recycled petroleum fractions, and the mixture is forced upwardly through the riser reactor. During the upward passage of the catalyst and of the petroleum fractions, the petroleum is cracked, and coke is simultaneously deposited on the catalyst. The coked catalyst and the cracked petroleum components are passed upwardly out of the riser and through a solid-gas separation system, e.g., a series of cyclones, at the top of the reactor vessel. The cracked petroleum fraction is conducted to product separation, while the coked catalyst, after steam stripping, passes into the regenerator vessel and is regenerated therein, as discussed above. Most of the cracking reactions in such modern FCC units take place in the riser reactor. Accordingly, the remainder of the reactor vessel is used primarily to separate entrained catalyst particles from the petroleum fractions.

Further details of FCC processes can be found in U.S. Patents 3,152,065; 3,261,776; 3,654,140; 3,812,029; 4,093,537; 4,118,337; 4,118,338; 4,218,306; 4,444,722; 4,459,203; as well as in Venuto et al, Fluid Catalytic Cracking With Zeolite Catalysts, Marcel Dekker, Inc. (1979).

Performance characteristics of FCC reactors can be measured by a number of factors, e.g., conversion of feed to all of the products of the FCC reactor, such as gasoline, coke and gas; selectivity of the conversion of feed to gasoline grade products; and octane number of product gasoline.

Conventional FCC catalyst may be used in the reactor utilizing the process. Suitable catalysts are, for example, those containing silica and silica alumina or mixtures thereof. Particularly useful are acidic zeolites, preferably low coke-producing crystalline zeolite cracking catalysts comprising faujasite, crystalline zeolites and other zeolites known in the art. Typically, the catalyst is a fine particle having an average size of 20 to 100 microns.

In FCC cracking hot catalyst (650°C $\pm$) is mixed with relatively cold (150°C to 375°C) charge stock. The catalyst is the heat transfer medium for vaporizing and superheating the oil vapor to a temperature suitable for the desired cracking reaction (480°C to 545°C). In the initial stage of mixing oil and catalyst, some oil is inevitably heated to a temperature approaching that of the hot catalyst with consequent overcracking, creating a large increase in gas make. Coking of the catalyst is particularly heavy when the hot catalyst contacts oil in the liquid phase above cracking temperature.

It is an object of the present invention to control the initial mixing so as to minimize localized overheating and decrease coking.

Accordingly, the present invention provides a fluid catalytic cracking process comprising admixing a hydrocarbon oil feed with hot regenerated catalyst in the bottom section of a reactor riser 102, passing the mixture of the hydrocarbon oil feed and the catalyst through the riser, thereby vaporizing the oil feed and effecting cracking thereof at the process temperature under endothermic process conditions and deactivating the catalyst by deposition of carbonaceous deposits thereon, separating the deactivated catalyst from the cracked hydrocarbon product, passing the deactivated catalyst to a regenerator 112 wherein the carbonaceous deposits are removed from the deactivated catalyst under exothermic process conditions by means of a regenerating medium introduced into the regenerator vessel, and passing a portion of the regenerated hot catalyst substantially above process cracking temperature to the bottom section of the reactor riser 102, characterized by:

continuously injecting liquid oil feed into a primary mixing zone 120 together with a first increment of hot catalyst sufficient to vaporize a major amount of oil feed without substantial cracking thereof; and

contacting the vaporized oil and first catalyst increment with a second increment of hot regenerated high activity catalyst in a secondary mixing zone disposed downstream from the primary mixing zone, thereby mixing additional hot active catalyst with vaporized oil feed to crack the oil feed in the reactor riser 102.

In another embodiment, the present invention provides a process wherein the riser 102 comprises an elongated cylindrical smooth-walled tube, the primary mixing zone comprises a coaxially aligned venturi tube 120 having a plurality of lower catalyst premix ports 122, a coaxially mounted feed inlet motive nozzle 118 disposed within the venturi tube 120 adjacent the catalyst premix ports 122 for ejecting liquid feed into a constricted throat zone of the venturi tube 120.

FIG. 1 is a schematic diagram of a vertical FCC reactor and regenerator system, including an improved mixing device;

FIG. 2 depicts an alternative venturi-type mixing device;

FIG. 3 is a graphic plot mixing temperature vs. riser vertical distance adjacent the venturi mixer; and

FIG. 4 is a schematic diagram of a venturi mixer reactor associated with two catalyst regenerators.

In general, this invention can be utilized with conventional FCC reactor, such as those disclosed in the references set forth above. Similarly, the process of this invention can also be utilized with various cracking feeds, such as naphthas, gas oils, vacuum gas oils, residual oils, light and heavy distillates and synthetic fuels.

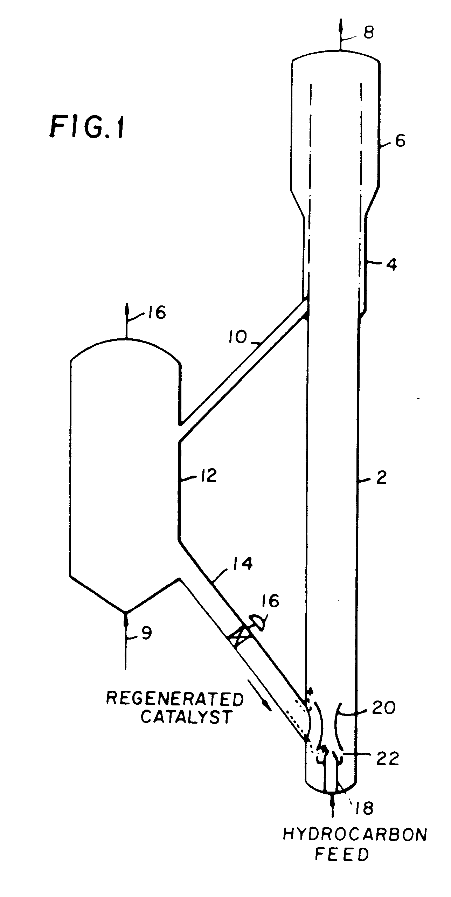

In reference to FIG. 1, representing a schematic flow diagram of an exemplary FCC unit, a hydrocarbon feed is introduced at the bottom of trhe riser reactor 102. Hot regenerated catalyst is also introduced to the bottom of the riser by a standpipe supply conduit 14, usually equipped with a flow control valve 16. The feed volatilizes and forms a suspension with the catalyst which proceeds upwardly in the reactor. The suspension formed in the bottom section of the riser is passed upwardly through the riser under selected temperature and residence time conditions. The suspension passes into a generally wider section of the reactor 116 which contains solid-vapor separation means, such as a conventional cyclone, and means for stripping entrained hydrocarbons from the catalyst. Neither the stripping section, nor the solid-gas separation equipment, is shown in the drawing for clarity.  Such equipment is conventional.
The vapor separated in the cyclone and in the stripping means,
including the diluent vapor, is withdrawn from the reactor by a
conduit 118.

Stripped catalyst containing carbonaceous deposits or coke is
withdrawn from the bottom of the stripping section through a conduit
110 and conducted to a regenerator 112.  In the regenerator 112 the
catalyst is regenerated by passing an oxygen-containing gas, such as
air, through a conduit 119, burning the coke off the catalyst in a
regenerator 112 and withdrawing the flue gasses from the regenerator
by a conduit 116.

The reactor riser usually comprises an elongated cylindrical
smooth-walled tube.  The mixing device 120 comprises an axially
aligned venturi tube having a plurality of lower catalyst premix ports
122.  A coaxially mounted feed inlet motive nozzle 118 terminates
within the venturi tube adjacent the catalyst premix ports for
ejecting liquid feed into a constricted throat zone of the venturi
tube.  The venturi tube has an upper outwardly flared discharge end
defining an upper annular catalyst inlet means.  Although a single
tube is depicted, one skilled in the art may modify the reactor design
to accomodate multiple venturi-type mixing devices.

The oil feed stock (preheated or not) may be used as the
propulsion medium in an ejector type device 120, which achieves mixing
of the oil feed with a controlled quantity of hot catalyst.  Some
steam, preferably 1-5 wt. % of the oil, may be added to assist in
vaporization of the oil and/or to provide mixing in the venturi.
Premix ports adjacent the outlet of motive nozzle 118 are sized to
admit enough hot catalyst to vaporize the oil and preheat the
resultant vapors to a temperature somewhat below normal cracking
temperature, typically 425°C to 475°C.  The mixing and vaporization
occurs substantially within the mixing venturi 120 into which the
motive nozzle discharges.

As the preheated mixture rises beyond the top discharge end of
the mixing venturi it is mixed with additional hot catalyst which
flows through the annulus between the mixing venturi and the cracking riser. In a typical FCC installation where an overall catalyst to oil weight ratio of 5:1 to 8:1 exists, advantageously, the incremental streams can be proportioned so that two to three parts of catalyst could pass through the premix ports and three to two parts through the annulus. In large scale units multiple mixing devices may be used rather than the single one shown in the drawing.

The fluidic action of the ejector tends to keep a uniform flow of catalyst through the premix ports and minimizes pressure surges associated with sudden mixing of slugs of liquid with hot catalyst. The parts of the ejector and venturi exposed to rapid catalyst movement should be hard surfaced to minimize wear. Suitable grades of steel may be employed as the main materials of construction. In the operation of FCC units according to this catalyst-feedstock mixing technique, the first catalyst increment flows in a continuous stream under steady state conditions from the catalyst supply conduit through the fluidized induction path created by the venturi flow characteristics. The relative ratio of catalyst flowing through the interior of the venturi mixer to catalyst flowing in the annular space outside the venturi can vary depending upon catalyst temperature, feedstock volatility, etc. A typcial FCC zeolite catalyst and heavy oil feedstock may operate with a relative weight ratio of 2:1 to 1:2.

Mixer configuration and relative reactor riser dimensions may be determined from these material properties as well. Venturi design can be optimized by providing the outlet area as a fraction of total reactor riser cross sectional area. Advantageously, the ratio of total venturi outlet area to total riser area $(A/A_t)$ is 1:1 to 1:3. Adequate venturi induction is achieved with a throat constriction area about 25 to 75% of the outlet area.

Other factors to be considered are the travel path of the first increment from the catalyst supply conduit outlet into the reactor riser and into the venturi tube flow path. In order to avoid undesirable pressure drop, a long tortuous path for the first increment should be avoided or minimized. Typically, the venturi length is chosen to approximate the catalyst supply conduit vertical dimension and is positioned coaxially in the riser within direct flow path or projection aspect of the supply conduit. In a typical installation the venturi longitudinal dimension will be up to 5 D (riser diameter), preferably 0.5 to 0.8 D.

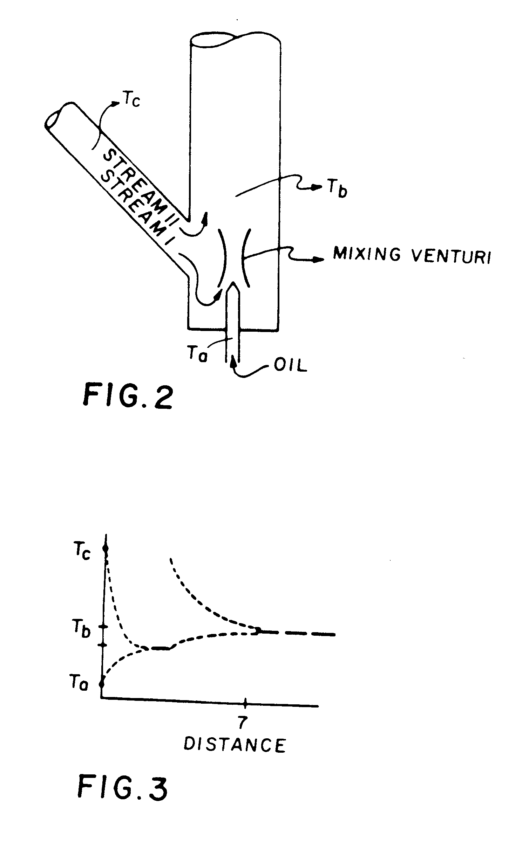

The venturi structure may be supported in the riser by mounting on the motive nozzle conduit 118, as depicted in FIG. 1 or it may be attached to the riser side walls by radial struts or the like. In FIG. 2 a venturi mixing device is depicted having a substantially open bottom inlet. This modification is designed for a large FCC riser to accomodate 4780 $M^3$/D gas oil feed, having a total area ($A_t$) of 0.5 $m^2$, a venturi outlet area of 0.3 $m^2$ and a motive nozzle outlet of 60 $cm^2$. The oil velocity leaving the motive nozzle is 60 m/sec, which induces a flow rate into the venturi inlet of 1.5 m/sec. The venturi outlet velocity for this design is 12 m/sec, well above the transport velocity of FCC catalyst-oil mixtures.

A typical temperature profile produced by a venturi mixer is depicted in FIG. 3, where average temperature of the catalyst-oil mixture ($T_b$) is plotted against downstream distance across the venturi and downstream. The first catalyst increment (Stream I) flows through the venturi ejector device to partially vaporize incoming oil and the second catalyst increment (Stream II) subsequently brings the mixture to the desired temperature. $T_a$ is the oil inlet temperature, while $T_c$ is the regenerated catalyst temperature.

Advantageously, the feedstock comprises a petroleum oil fraction at a feed temperature of 150°C to 375°C, the hot regenerated catalyst is from the regenerator vessel at 650°C to 725°C, the mixture of vaporized feed and the first catalyst portion leaves the venturi tube at a temperature below cracking temperature and is further heated by the second catalyst portion to an average process cracking temperature of 480°C to 535°C. The weight ratio of total catalyst to feed is usually 4:1 to 8:1.

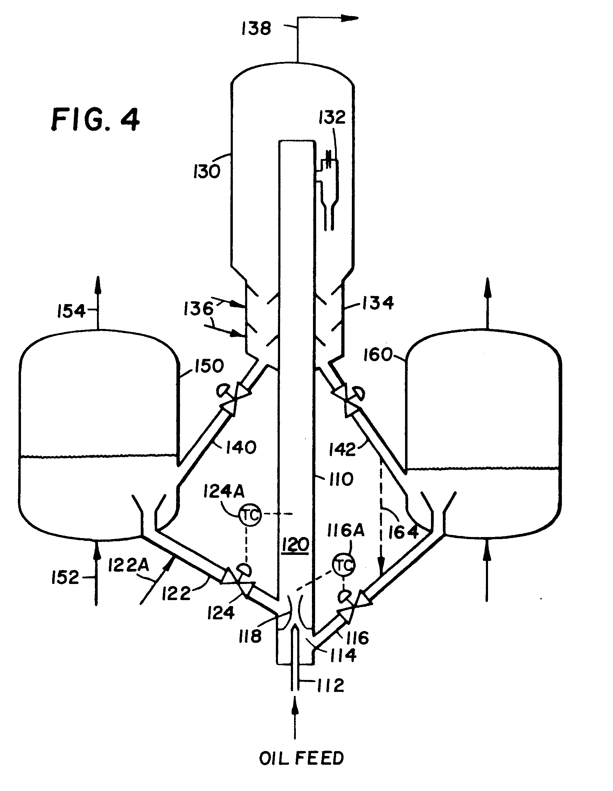

FIG. 4 shows a schematic flow diagram of an exemplary FCC unit using two regenerators. A hydrocarbon oil feed is introduced at the bottom of riser reactor 110, by injecting the liquid oil through inlet conduit 112 into a primary mixing zone 114 together with the first catalyst increment from conduit 116. This mixing results in vaporizing the feedstock, which passes through a flared tube or venturi tube 118 into a secondary mixing zone where it contacts a second hot regenerated catalyst increment introduced at a lower portion of the riser through supply conduit 122, usually equipped with a flow control valve 124. The feed forms a suspension with the catalyst which proceeds upwardly in the reactor. The suspension passes into a generally wider section 130 of the reactor which contains solid-vapor separation means, such as a conventional cyclone 132, and means for stripping entrained hydrocarbons from the catalyst in stripping section 134 by injecting steam or the like via conduit 136.

Stripped catalyst containing carbonaceous deposits or coke is withdrawn from the bottom of the stripping section through conduit 140 and conducted to a first regenerator 150. The catalyst is regenerated by adding air via conduit 152, burning coke off the catalyst, and withdrawing flue gas by conduit 154. Active hot regenerated catalyst passes via conduit 122 at a temperature of 650°C to 725°C into the secondary mixing zone under through control valve 124, which is operated by temperature control means 124A responsive to temperature of the hot catalyst-vapor mixture above the secondary mixing zone 120.

A portion of hot stripped catalyst is removed via conduit 142 and is partially regenerated in a second vessel 160 operating at substantially lower temperature than the first regenerator (e.g., below 600°C). It may be advantageous to bypass a portion of stripped catalyst from conduit 142 through line 164 to recycle conduit 116. Temperature control in the primary mixing zone is achieved by measuring the zone exit stream mixture adjacent the venturi or baffle flare 118 or downstream therefrom and operating valve 16 through control unit 116A.

The catalytic cracking activity may be adjusted according to the particular feedstock and processing conditions. A typical rare earth substituted Y type zeolite (REY) catalyst can usually be fully regenerated in the primary loop to a microactivity test value of 70 and fresh makeup catalyst having higher activity can be added via conduit 122A. It is preferred to add relatively lower activity catalyst having an average microactivity test value less than 40 to the primary mixing zone.  It should be understood that bypassing
stripped catalyst via line 164 concurrently with regeneration in
vessel 160 will provide a blended vaporization increment in which one
portion is heavily coked and the other is more active due to oxidative
regeneraton.

During operation of the system the oil feed stock may be used
as the propulsion medium for the primary mixing, which achieves mixing
of the oil feed with a controlled quantity of hot low activity
catalyst, preheating the resultant vapors to a temperature of, e.g.,
425°C to 475°C somewhat below normal cracking temperature.  The mixing
and vaporization occurs substantially within the mixing zone 114 and
venturi 118.

Advantageously, when using two regenerators, the feedstock
comprises a petroleum oil fraction at a feed temperature of 150°C to
375°C, and the mixture of substantially vaporized feed and the first
catalyst increment leaves the venturi tube at a temperature below
cracking temperature.  The hot regenerated catalyst is added to the
secondary mixing zone at 650°C to 725°C, further heating the stream to
an average process cracking temperature of 480°C to 535°C.  The weight
ratio of total catalyst to feed when using two regenerators is usually
8:1 to 14:1.

The present invention is useful in converting a number of
hydrocarbon feedstock materials, particularly those which are highly
paraffinic.  Petroleum gas oil derived from Gippslan crude or Fischer-
Tropsch waxy hydrocarbons may be cracked advantageously by the present
techniques.

In a preferred embodiment a paraffinic petroleum gas oil is
preheated to 250°C to 425°C, and mixed initially with less active
coked catalyst increment having a temperature of 595°C at a catalyst
to oil weight ratio of 8.7:1 to vaporize 90% of the feed.  This
mixture is then mixed with an additional 4 parts by weight of
regenerated high activity catalyst having a temperature of 750°C to
crack the vaporized feed to gasoline, distillate and other lower
molecular weight products.  This technique results in less
overcracking and an improved product distribution.

A less active coked catalyst may also be obtained with only a single regenerator.  The mixing of hot regenerated catalyst with stripped spent catalyst will create a catalyst with relatively lower activity which is still hot enough to vaporize most of the feed in the primary mixing zone.

## CLAIMS:

1. A fluid catalytic cracking process comprising admixing a hydrocarbon oil feed with hot regenerated catalyst in the bottom section of a reactor riser 102, passing the mixture of the hydrocarbon oil feed and the catalyst through the riser, thereby vaporizing the oil feed and effecting cracking thereof at the process temperature under endothermic process conditions and deactivating the catalyst by deposition of carbonaceous deposits thereon, separating the deactivated catalyst from the cracked hydrocarbon product, passing the deactivated catalyst to a regenerator 112 wherein the carbonaceous deposits are removed from the deactivated catalyst under exothermic process conditions by means of a regenerating medium introduced into the regenerator vessel, and passing a portion of the regenerated hot catalyst substantially above process cracking temperature to the bottom section of the reactor riser 102, characterized by:

continuously injecting liquid oil feed into a primary mixing zone 120 together with a first increment of hot catalyst sufficient to vaporize a major amount of oil feed without substantial cracking thereof; and

contacting the vaporized oil and first catalyst increment with a second increment of hot regenerated high activity catalyst in a secondary mixing zone disposed downstream from the primary mixing zone, thereby mixing additional hot active catalyst with vaporized oil feed to crack the oil feed in the reactor riser 102.

2. Process of Claim 1 wherein the riser 102 comprises an elongated cylindrical smooth-walled tube, the primary mixing zone comprises a coaxially aligned venturi tube 120 having a plurality of lower catalyst premix ports 122, a coaxially mounted feed inlet motive nozzle 118 disposed within the venturi tube 120 adjacent the catalyst premix ports 122 for ejecting liquid feed into a constricted throat zone of the venturi tube 120.

3. Process of Claims 1 or 2 wherein the first increment of hot catalyst is of low activity relative to the second increment.

4. Process of Claim 3 wherein the feed comprises a petroleum oil fraction at a feed temperature of 150°C to 375°C, which is mixed with low activity catalyst having a temperature below 600°C and vaporizes at least 90% of the feed, the mixture of vaporized feed and the first catalyst increment leaves the primary mixing zone 114 at a temperature below 425°C, and is further heated by the second catalyst increment having a temperature of 650°C to 725°C to a cracking temperature of 480°C to 535°C.

5. Process of Claim 4 wherein the weight ratio of total catalyst to feed is 8:1 to 14:1, and wherein a major amount of total catalyst comprises the first increment.

6. Process of Claim 3 wherein the first catalyst increment is removed from the reactor riser 110 and partially regenerated before recycling to the primary mixing zone.

7. Process of Claim 3 wherein at least a portion of the first catalyst increment is steam stripped and recycled to the primary mixing zone without oxidative regeneration.

8. Process of Claim 2 wherein the feed comprises a petroleum oil fraction at a feed temperature of 150°C to 375°C, which is mixed with a first increment comprising hot regenerated catalyst having a temperature of 650°C to 725°C, the mixture of vaporized feed and the first catalyst portion leaves the venturi tube 120 at a temperature below 425°C and is further heated by the second catalyst portion to a cracking temperature of 480°C to 535°C.

9. Process of Claim 8 wherein the weight ratio of total catalyst to feed is 4:1 to 8:1, and wherein a major amount of total catalyst comprises the first portion.

F-3103(3337) — 13 — 0180291

10. Process of Claim 2 wherein the venturi tube mixer 120 is coaxially mounted in a vertical tube reactor riser 102, and wherein the first catalyst portion is admixed with liquid feed oil at a weight ratio of 3:1 to 4:1 and wherein the second portion is admixed at a feed weight ratio of 2:1 to 3:1.

11. An improved reactor system for fluidized bed catalytic cracking comprising a vertical riser 102 operatively connected to receive hot regenerated catalyst from at least one catalyst regenerator 112;

means 118 for feeding liquid oil under pressure to a bottom catalyst mixing zone;

first mixing means 120 for combining a first catalyst increment in the bottom reactor mixing zone with liquid feed oil in sufficient amount to vaporize the liquid oil;

second mixing means adapted to receive vaporized oil and a second hot regenerated catalyst increment from the regenerator 120 for cracking the vaporized oil; and

means for recovering coked catalyst from the cracked oil and recycling a portion of the coked catalyst to the catalyst regenerator 112.

6406H/0443H

0180291

FIG.1

8

6

4

16

10

12

14

16

2

9

REGENERATED
CATALYST

20

22

18

HYDROCARBON
FEED

FIG.2

FIG.3

FIG. 4

OIL FEED

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 090 948 (SCHWARZENBEK)<br><br>* Figure; claims 1-10; table II; column 7, line 50 - column 8, line 31 * | 1,3-5, 7,11 | C 10 G 11/18<br>B 01 J 8/18 |
| X | US-B- 467 250 (McKENNA)<br><br>* Figure; claims 1,6 * | 1,3-6, 11 | |
| X | US-A-4 417 974 (HAUNSCHILD)<br>* Figure; abstract; claims 1,2 * | 1 | |
| Y | | 2,8-10 | |
| Y | US-A-3 353 925 (BAUMANN et al.)<br>* Figure 1; claims 1-4 * | 2,8-10 | TECHNICAL FIELDS SEARCHED (Int. Cl.4) |
| X | US-A-3 639 228 (CARR et al.)<br>* Figure; claims * | 1 | C 10 G<br>B 01 J |
| A | US-A-3 799 868 (GANTT)<br>* Figures 1,2; claims 1-5 * | 1-11 | |
| A | US-A-2 695 265 (DEGUEN)<br>* Figures; claims * | 2,8-10 | |
| A | US-A-4 414 101 (SMITH et al.)<br>* Figures 1,2; claims * | 1 | |

The present search report has been drawn up for all claims

| Place of search | Date of completion of the search | Examiner |
|---|---|---|
| THE HAGUE | 18-10-1985 | MICHIELS P. |